# EUROPEAN PATENT SPECIFICATION

(11) **EP 2 315 109 B1**
(45) Date of publication and mention of the grant of the patent: **24.08.2016**
(21) Application number: 10013701.7
(22) Date of filing: 15.10.2010
(51) Int. Cl.: G06F 3/044, G06F 3/041

(54) **Mobile terminal**
Mobiles Endgerät
Terminal mobile

(30) Priority: 23.10.2009 KR 20090101386
(43) Date of publication of application: 27.04.2011
(73) Proprietor: LG Electronics Inc., Seoul 150-721 (KR)
(72) Inventor: Kwak, Haengchul, Seoul, 153-803 (KR)
(74) Representative: Gunzelmann, Rainer

(56) References cited:
- EP-A2- 0 483 709
- EP-A2- 1 840 715
- EP-A2- 2 109 030
- WO-A1-2009/067224
- WO-A2-2009/028921
- WO-A2-2009/096712
- CN-C- 100 480 972
- US-A1- 2008 042 985
- US-A1- 2008 246 723
- US-A1- 2009 194 341

## Description

### BACKGROUND OF THE INVENTION

### Field of the Invention

The present invention relates to a mobile terminal. More specifically, the present invention relates to a mobile terminal capable of detecting proximity signals from a capacitive touch screen as well as contact signals from the capacitive touch screen.

### Description of the Related Art

As the functions of terminals such as personal computers, laptop computers, cellular phones and the like are diversified, the terminals are constructed in the form of a multimedia player having multiple functions of capturing pictures or moving images, playing music, moving image files and games and receiving broadcasting programs.

Terminals can be divided into mobile terminals and stationary terminals. The mobile terminals can be classified into handheld terminals and vehicle mount terminals according to whether users can personally carry the terminals.

To support and enhance functions of a terminal, it can be considered to improve a structural part and/or a software part of the terminal.

A variety of recent terminals including mobile terminals provide more complex and various functions.

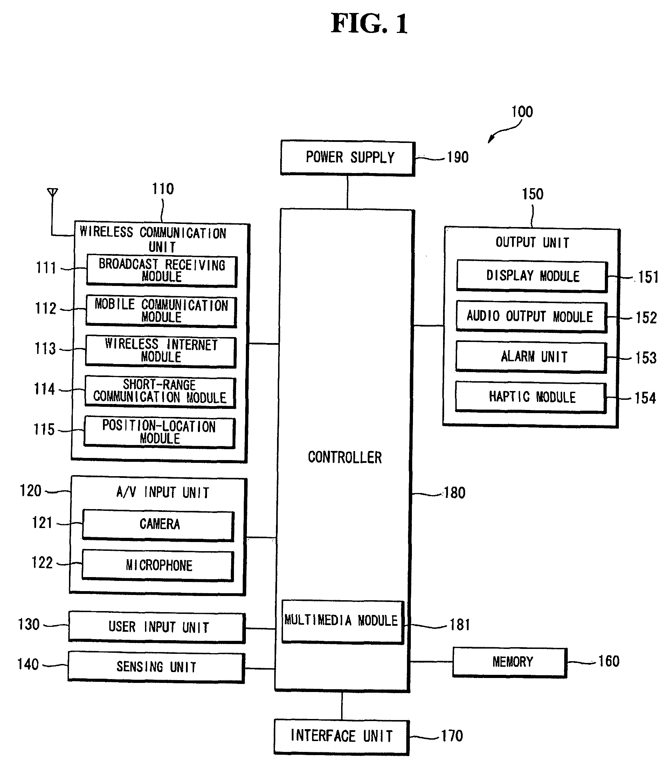

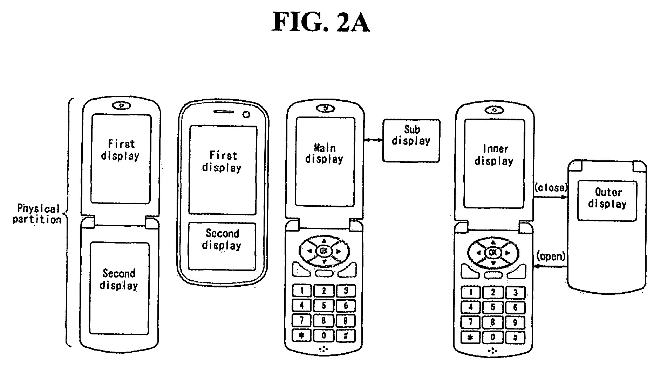

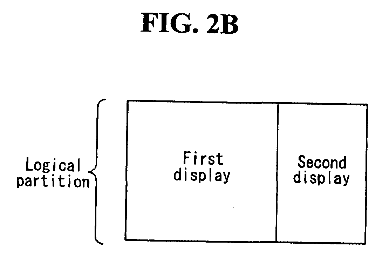

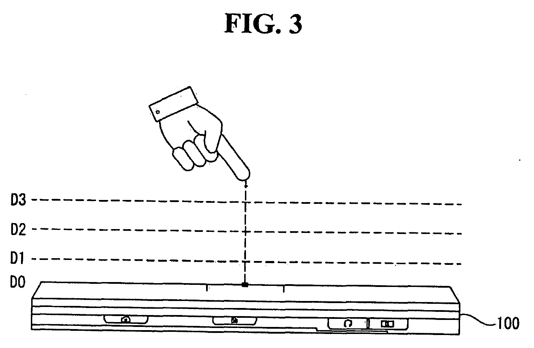

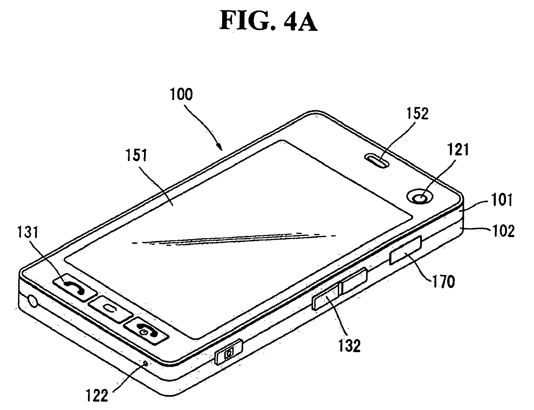

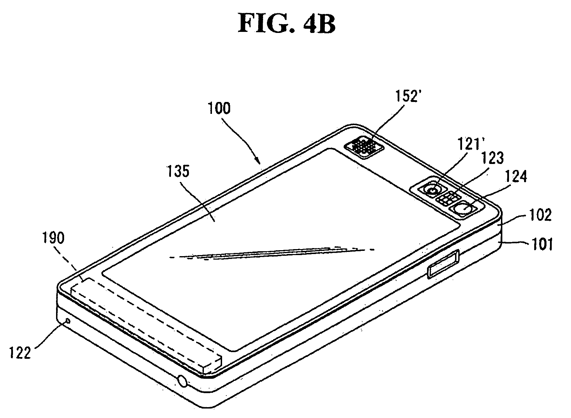

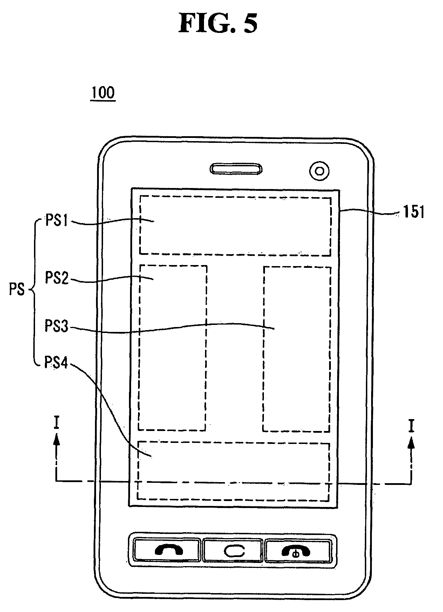

US 2008/0042985(see in particular figure 16 in combination with figures 2 to 6 and corresponding part in the description) discloses combined proximity sensing and touch sensing, viz. for an approaching stylus and a contacting finger. This is accomplished by combination of two sensing technologies: First capacitive sensing technology (50 in figure 3 and 31 plus 50 in figure 4; electrostatic capacitance sensors 73 in figure 16). Second electromagnetic sensing technology (60 in figure 3 and 32 plus 60 in figure 5;X-axis coil units 71 and Y-axis coil units 72 in figure 16) comprising coils (see figure 5 or figure 16). As shown in figure 16 (see also paragraph 191) the capacitance sensors (73) are laid out in an alternating manner beside the X-axis coil units (71) on the surface of a transparent substrate. A plurality of Y-axis coil units (72) is disposed at a back side of the transparent substrate (see paragraph 192). Thus a combined sense unit (70) is provided on top of a display panel (13'). US 2008/0246723 (see figures 1B and 2 as well as paragraphs 9 and 12) discloses discrete capacitive sensors elements (buttons) and additionally around them a capacitive proximity sensor element. Apparently both sensors are placed on the same level.

US 2009/09194341 (see figures 1 to 2 and 4 to 5 as well as paragraphs 66 and 69 to 76) discloses a resistive touch screen which allows the upper conductive plate to be operated as capacitive proximity sensor. One technology is hence used in two modes.

Further known are self-capacitance based touch sensing devices. As the skilled person is aware for this capacitive technology the electric filed lines extend into the space and thus allow far field sensing. Contrary to mutual capacitance based touch sensing devices where the electric field lines end at the RX sensing lines. Hence this capacitive technology is rather suitable for near field (contact) touch sensing.

### SUMMARY OF THE INVENTION

The following advantages can be obtained from a mobile terminal according to the present invention.

First, proximity signals as well as contact signals can be detected from a capacitive touch screen.

Second, noise effect originating from a display layer affecting a touch input layer can be reduced.

Third, a single controller can process both the contact signals and the proximity signals associated with a touch screen.

Fourth, a proximity sensor layer can be disposed in various positions.

To achieve these and other objects, and in accordance with the purpose of the present invention, as embodied and broadly described herein, the present invention provides in one aspect a mobile terminal according to the features of claim 1.

The present invention also provides a corresponding method of controlling a mobile terminal according to the features of claim 8.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 is a block diagram of a mobile terminal according to an embodiment of the present invention;
FIGS. 2A and 2B illustrate forms of the mobile terminal and display screens according to various embodiments of the present invention;
FIG. 3 is an overview for explaining a proximity depth of a proximity sensor;
FIG. 4A is a front perspective view of the mobile terminal according to an embodiment of the present invention;
FIG. 4B is a rear perspective view of the mobile terminal according to an embodiment of the present invention;
FIG. 5 is a plan view of a mobile terminal according to one embodiment of the present invention;
FIG. 6 is a cross sectional view of a mobile terminal of FIG. 5 along I-I direction;
FIG. 7 illustrates relationship between a proximity touch sensor and a controller of a mobile terminal of FIG. 5;
FIG. 8 illustrates the operation of a mobile terminal of FIG. 5;
FIG. 9 is a plan view of a mobile terminal according to another embodiment of the present invention;
FIG. 10 illustrates relationship between a proximity touch sensor and a controller of a mobile terminal of FIG. 9;
FIGS. 11 and 12 illustrate operational procedures of a mobile terminal according to one embodiment of the present invention; and
FIGS. 13 and 14 illustrate different operational procedures of a mobile terminal according to one embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

FIG. 1 is a block diagram of a mobile terminal 100 according to an embodiment of the present invention. The mobile terminal 100 can include a radio communication unit 110, an audio/video (A/V) input unit 120, a user input unit 130, a sensing unit 140, an output unit 150, a memory 160, an interface 170, a controller 180, and a power supply 190. The components shown in FIG. 1 are not essential parts and the number of components included in the mobile terminal can be varied.

The components of the mobile terminal will now be described.

The radio communication unit 110 can include at least one module that enables radio communication between the mobile terminal 100 and a radio communication system or between the mobile terminal 100 and a network in which the mobile terminal 100 is located. For example, the radio communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160.

The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The local area communication module 114 means a module for local area communication. Bluetooth, radio frequency identification (RFID), infrared data association (IrDA), ultra wideband (UWB) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time. Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display unit 151.

The image frames processed by the camera 121 can be stored in the memory 160 or transmitted to an external device through the radio communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display unit 151, an audio output module 152, an alarm 153 and a haptic module 154.

The display unit 151 displays information processed by the mobile terminal 100. For example, the display unit 151 displays UI or graphic user interface (GUI) related to a telephone call when the mobile terminal is in the call mode. The display unit 151 displays a captured or/and received image, UI or GUI when the mobile terminal 100 is in the video telephony mode or the photographing mode.

he display unit 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display unit 151 can also be of the light transmission type. According to this structure, a user can see an object located behind the body of the mobile terminal 100 through an area of the body of the mobile terminal 100, which is occupied by the display unit 151.

The mobile terminal 100 can include at least two display units 151 according to constitution of the terminal. For example, the mobile terminal 100 can include a plurality of displays that are arranged on a single face at a predetermined distance or integrated. Otherwise, the plurality of displays can be arranged on different sides.

In the case where the display unit 151 and a sensor sensing touch (referred to as a touch sensor hereinafter) form a layered structure, which is referred to as a touch screen hereinafter, the display unit 151 can be used as an input device in addition to an output device. The touch sensor can be in the form of a touch film, a touch sheet and a touch pad, for example.

The touch sensor can be constructed such that it converts a variation in pressure applied to a specific portion of the display unit 151 or a variation in capacitance generated at a specific portion of the display unit 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

Referring to FIG. 1, the proximity sensor 141 can be located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

The audio output module 152 can output audio data received from the radio communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

The alarm 153 outputs a signal for indicating generation of an event of the mobile terminal 100. Examples of events generated in the mobile terminal include receiving of a call signal, receiving of a message, input of a key signal, input of touch, etc. The alarm 153 can output signals in forms different from video signals or audio signals, for example, a signal for indicating generation of an event through vibration. The video signals or the audio signals can be also output through the display unit 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to constitution of the mobile terminal.

The memory 160 can store a program for the operation of the controller 180 and temporarily store input/output data (for example, phone book, messages, still images, moving images, etc.). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices. The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a port.

The interface 170 can serve as a path through which power from an external cradle is provided to the mobile terminal 100 when the mobile terminal 100 is connected to the external cradle or a path through which various command signals inputted by the user through the cradle to the mobile terminal 100. The various command signals or power input from the cradle can be used as a signal for confirming whether the mobile terminal 100 is correctly set in the cradle.

The controller 180 controls the overall operation of the mobile terminal. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

Various embodiments of the present invention can be implemented in a computer or similar device readable recording medium using software, hardware or a combination thereof, for example.

According to hardware implementation, the embodiments of the present invention can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some cases, the embodiments can be implemented by the controller 180.

According to software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

FIGS. 2A and 2B illustrate the mobile terminal 100 and the display unit 151 according to various embodiments of the present invention.

Referring to FIG. 2A, the display unit 151 can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body. The sub display is separated from the mobile terminal and detachably combined with the mobile terminal body through an interface to display data from the mobile terminal 100.

The display unit 151 can include first and second displays which are logically separated from each other in a display panel, as illustrated in FIG. 2B.

FIG. 3 is a conceptional view for explaining a proximity depth of the proximity sensor.

As shown in FIG. 3, when a pointer such as a user's finger approaches the touch screen, the proximity sensor located inside or near the touch screen senses the approach and outputs a proximity signal.

The proximity sensor can be constructed such that it outputs a proximity signal according to the distance between the pointer approaching the touch screen and the touch screen (referred to as "proximity depth").

The distance in which the proximity signal is output when the pointer approaches the touch screen is referred to as a detection distance. The proximity depth can be known by using a plurality of proximity sensors having different detection distances and comparing proximity signals respectively output from the proximity sensors.

FIG. 3 shows the section of the touch screen in which proximity sensors capable of sensing three proximity depths are arranged. Proximity sensors capable of sensing less than three or more than four proximity depths can be arranged in the touch screen.

Specifically, when the pointer completely comes into contact with the touch screen (DO), it is recognized as contact touch. When the pointer is located within a distance D1 from the touch screen, it is recognized as proximity touch of a first proximity depth. When the pointer is located in a range between the distance D1 and a distance D2 from the touch screen, it is recognized as proximity touch of a second proximity depth. When the pointer is located in a range between the distance D2 and a distance D3 from the touch screen, it is recognized as proximity touch of a third proximity depth. When the pointer is located at longer than the distance D3 from the touch screen, it is recognized as cancellation of proximity touch.

Accordingly, the controller 180 can recognize the proximity touch as various input signals according to the proximity distance and proximity position of the pointer with respect to the touch screen and perform various operation controls according to the input signals.

FIG. 4A is a front perspective view of a mobile terminal or a handheld terminal 100 according to an embodiment of the present invention.

The handheld terminal 100 has a bar type terminal body. However, the present invention is not limited to a bar type terminal and can be applied to terminals of various types including slide type, folder type, swing type and swivel type terminals having at least two bodies that are relatively movably combined.

The terminal body includes a case (a casing, a housing, a cover, etc.) forming the exterior of the terminal 100. In the present embodiment, the case can be divided into a front case 101 and a rear case 102. Various electronic components are arranged in the space formed between the front case 101 and the rear case 102. At least one middle case can be additionally arranged between the front case 101 and the rear case 102.

The cases can be formed of plastics through injection molding or made of a metal material such as stainless steel (STS) or titanium (Ti).

The display unit 151, the audio output unit 152, the camera 121, the user input unit 130/131 and 132, the microphone 122 and the interface 170 can be arranged in the terminal body, specifically, in the front case 101.

The display unit 151 occupies most part of the main face of the front case 101. The audio output unit 152 and the camera 121 are arranged in a region in proximity to one of both ends of the display unit 151 and the user input unit 131 and the microphone 122 are located in a region in proximity to the other end of the display unit 151. The user input unit 132 and the interface 170 are arranged on the sides of the front case 101 and the rear case 102.

The user input unit 130 is operated to receive commands for controlling the operation of the handheld terminal 100 and can include a plurality of operating units 131 and 132. The operating units 131 and 132 can be referred to as manipulating portions and employ any tactile manner in which a user operates the operating units 131 and 132 while having tactile feeling.

First and second operating units 131 and 132 can receive various inputs. For example, the first operating unit 131 receives commands such as start, end and scroll and the second operating unit 132 receives commands such as control of the volume of sound output from the audio output unit 152 or conversion of the display unit 151 to a touch recognition mode.

FIG. 4B is a rear perspective view of the handheld terminal shown in FIG. 4A according to an embodiment of the present invention.

Referring to FIG. 4A, a camera 121' can be additionally attached to the rear side of the terminal body, that is, the rear case 102. The camera 121' has a photographing direction opposite to that of the camera 121 shown in FIG. 4A and can have pixels different from those of the camera 121 shown in FIG. 4A.

For example, it is desirable that the camera 121 has low pixels such that it can capture an image of the face of a user and transmit the image to a receiving part in case of video telephony while the camera 121' has high pixels because it captures an image of a general object and does not immediately transmit the image in many cases. The cameras 121 and 121' can be attached to the terminal body such that they can be rotated or pop-up.

A flash bulb 123 and a mirror 124 are additionally arranged in proximity to the camera 121'. The flash bulb 123 lights an object when the camera 121' takes a picture of the object. The mirror 124 is used for the user to look at his/her face in the mirror when the user wants to self-photograph himself/herself using the camera 121'.

An audio output unit 152' can be additionally provided on the rear side of the terminal body. The audio output unit 152' can achieve a stereo function with the audio output unit 152 shown in FIG. 4A and be used for a speaker phone mode when the terminal is used for a telephone call.

A broadcasting signal receiving antenna 124 can be additionally attached to the side of the terminal body in addition to an antenna for telephone calls. The antenna 124 constructing a part of the broadcasting receiving module 111 shown in FIG. 1 can be set in the terminal body such that the antenna 124 can be pulled out of the terminal body.

The power supply 190 for providing power to the handheld terminal 100 is set in the terminal body. The power supply 190 can be included in the terminal body or detachably attached to the terminal body.

A touch pad 135 for sensing touch can be additionally attached to the rear case 102. The touch pad 135 can be of a light transmission type as the display unit 151. In this case, if the display unit 151 outputs visual information through both sides thereof, the visual information can be recognized through the touch pad 135. The information output through both sides of the display unit 151 can be controlled by the touch pad 135. Otherwise, a display is additionally attached to the touch pad 135 such that a touch screen can be arranged even in the rear case 102.

The touch pad 135 operates in connection with the display unit 151 of the front case 101. The touch pad 135 can be located in parallel with the display unit 151 behind the display unit 151.The touch panel 135 can be identical to or smaller than the display unit 151 in size.

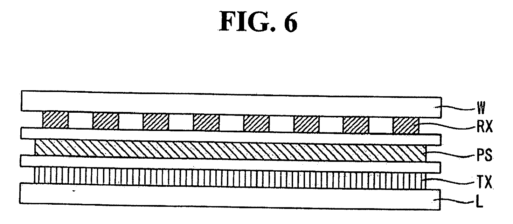

FIG. 5 is a plan view of a mobile terminal according to one embodiment of the present invention and FIG. 6 is a cross sectional view of a mobile terminal of FIG. 5 along I-I direction.

As shown in the figure, a proximity sensor layer (PS) can be disposed in the lower part of a display unit 151 of a mobile terminal 100 according to one embodiment of the present invention.

A display unit 151 not only outputs video signals of a mobile terminal 100 but also can function as an input device as well as an output device in a sense that the display unit 151 receives touch inputs of the user. If a display unit 151 is observed from the outside of a mobile terminal 100, which is a normal usage environment, the display unit 151 can be viewed as a single layer. The display unit 151, however, can comprise a plurality of layers. In other words, as shown in FIG. 6, a display unit 151 can comprise a display layer(L), a touch input layer(TX), a touch output layer(RX), a protection layer(W), and a proximity sensor layer(PS).

A display layer (L) is an area where an image according to control signals generated from a control unit (180 of FIG. 1) of a mobile terminal 100 is displayed.

To receive touch input readily, a layer related to a touch input can be disposed in an upper side of a display unit 151 and accordingly, a display layer (L) can be disposed in the bottom layer of the display unit 151. If the display layer (L) is disposed in the bottom layer of the display unit 151, an image displayed on the display layer (L) passes the other layers on top thereof, thus perceived visually by the user. Although the other layers are placed between the display layer (L) and the user's eyes, the other layers can be relatively thin or composed of transparent material. Therefore, the user does not have difficulty in perceiving images displayed on the display layer (L). The display layer (L) can be made of LCD, OLED, and the like.

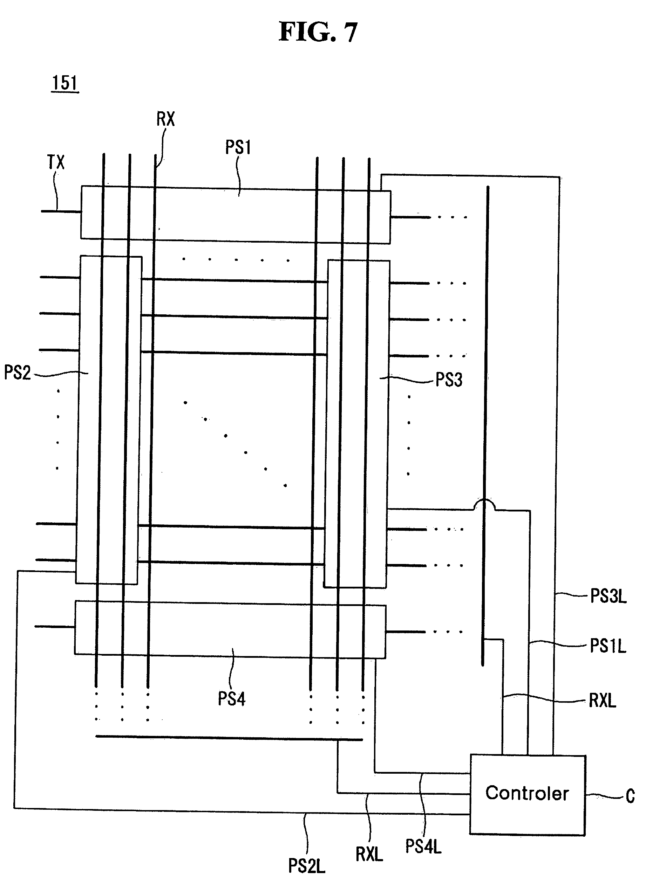

A touch input layer (TX) and a touch output layer (RX) function respectively as a current input and a current output terminal of a capacitive touch screen. Based on the principle of operation, a touch screen can be classified into a resistance film type operated by touch pressure, an infrared ray type operated by perceiving interception of infrared rays, a ultrasonic wave type operated by using reflection of ultrasonic waves, a tension measurement type measuring displacement due to pressure, a piezoelectric type using crystal sensitive to pressure, and a capacitive type operated by perceiving change of static voltage. Among various types of touch screens as described above, a mobile terminal 100 according to one embodiment of the present invention can employ a capacitive touch screen. In a capacitive touch screen, current is applied to a touch input layer (TX) and the applied current is output through a touch output layer (RX). If the user touches a screen by his or her finger, an electric field is established between the user's finger and the screen. Establishment of an electric field can be detected by change of capacitance; the change of capacitance detected can be recognized as coordinate values while the change of capacitance detected passes a controller (C of FIG. 7) of a capacitive touch screen. Since a capacitive touch screen provides excellent recognition rate and superior light transmittance and allows easy implementation of multi-touch, the capacitive touch screen is gradually accepted for use.

As for a touch input layer (TX) and a touch output layer (RX), the touch input layer (TX) can be disposed in a lower side and a touch output layer (RX) can be disposed in an upper side. A display layer (L) can generate noise during operation. By disposing the display layer (L) in the bottom layer, noise effect on the operation of the other parts of a display unit 151 can be minimized. Moreover, a touch output layer (RX) can be disposed farther than the touch input layer (TX). As described above, the touch input layer (TX) is an input terminal to which current is applied while the touch output layer (RX) is an output terminal from which touch signals are output. Therefore, to minimize the effect imposed on output signals by the noise generated from the display layer (L), the touch output layer (RX) can be much farther from the display layer (L).

A protection layer (W) is disposed at the top of a display unit 151. The protection layer (W) is made of tempered glass, protecting individual components of a display unit 151 from external impact.

A proximity sensor layer (PS) is a device for detecting proximity signals. The proximity sensor layer (PS) can be disposed between a touch input layer (TX) and a touch output layer (RX). If the proximity sensor layer (PS) is disposed between the touch input layer (TX) and the touch output layer (RX), a shielding effect against noise generated from the display layer (L) can be obtained, which is described in detail below.

As shown in FIG. 5, a proximity sensor layer (PS) can comprise a first to a fourth proximity sensor layer (PS1 to PS4). The first to the fourth proximity sensor layer (PS1 to PS4) can be disposed respectively in the upper, the lower, the left, and the right side of a display unit 151; and each proximity sensor layer (PS) can be formed in the form of a flat panel. Since each proximity sensor layer (PS) is disposed in a layer lower than the touch output layer (RX), distance between the display layer (L) and the touch output layer (RX) can be made distant from each other. Also, since the proximity sensor layer (PS) is formed in the form of a flat panel, noise generated from the display layer (L) and propagating toward the touch output layer (RX) can be shielded. Therefore, noise shielding effect can be obtained without installing a separate shielding layer for suppressing noise generated from the display layer (L).

Since a proximity sensor layer (PS) is disposed in four directions of a display unit 151, capacitance change of a conductor approaching the display unit 151 can be perceived. Capacitance change perceived by each proximity sensor layer (PS) can be calculated as coordinate values by the controller (C of FIG. 7). As described above, a display unit 151 of a mobile terminal 100 according to one embodiment of the present invention can employ a capacitive touch screen. Since the operation of a proximity sensor layer (PS) according to one embodiment of the present invention basically makes use of detecting capacitance change which is the same as employed in a capacitive touch screen, a separate controller for calculating coordinate values from signals detected by the proximity sensor layer (PS) is not required. Therefore, by using a proximity sensor layer (PS) according to one embodiment of the present invention, a total cost for manufacturing a mobile terminal 100 can be reduced.

FIG. 7 illustrates relationship between a proximity touch sensor and a controller of a mobile terminal of FIG. 5.

As shown in the figure, a display unit 151 according to one embodiment of the present invention disposes a touch output layer (RX) in the upper side; a first to a fourth proximity sensor layer (PS1 to PS4) beneath the touch output layer (RX); and a touch input layer (PX) thereunder.

A touch output layer lead-out line (RXL) extended from a touch output layer (RX), a touch input layer lead-in line (TXL) extended from a touch input layer (TX), and a first to a fourth proximity sensor layer lead-out lines (PS1L to PS4L) extended from a first to a fourth proximity sensor layer (PS1 to PS4) can be connected to a controller (C).

A controller (C) can control a capacitive touch screen and calculate coordinate values of a touch point by using capacitance change detected through the capacitive touch screen. Moreover, the controller (C) can calculate coordinate values of a point to which a conductor such as the user's finger moves by using capacitance change detected through the first to the fourth proximity sensor layer (PS1 to PS4) .

Since the operation of the first to the fourth proximity sensor layer (PS1 to PS4) as well as the operation of the touch input layer (TX) and the touch output layer (RX) are all realized by detecting capacitance change, a mobile terminal 100 according to one embodiment of the present invention can control two devices by using a single controller (C) and calculate coordinate values according to the signals output from the two devices. Therefore, a total cost for manufacturing a mobile terminal 100 can be reduced.

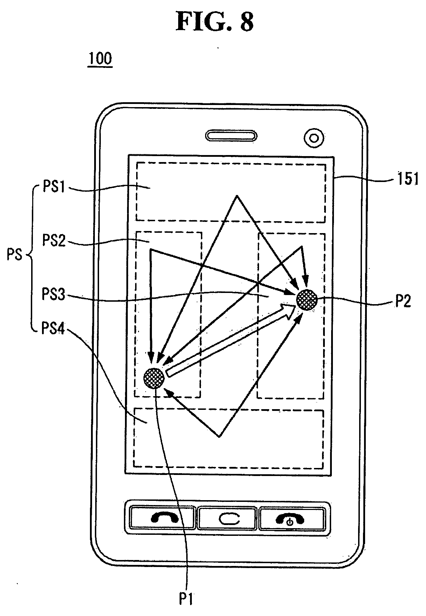

FIG. 8 illustrates the operation of a mobile terminal of FIG. 5.

As shown in the figure, in a mobile terminal 100 according to one embodiment of the present invention, the user can move a conductor such as his or her finger from a first position (P1) to a second position (P2) while the conductor is separated from the display unit 151 with a predetermined distance.

If the user moves his or her finger from the first position (P1) to the second position (P2), a proximity sensor layer (PS) can detect proximity signals. In other words, a first to a fourth proximity sensor layer (PS1 to PS4) can be set to have higher sensitivity than a touch input layer (TX) and a touch output layer (RX) of a touch screen. In case of a touch input layer and a touch output layer, if sensitivity is set to a high value, noise can be generated so that touch signals from a display unit 151 may not be sensed easily. However, since the first to the fourth proximity sensor layer (PS1 to PS4) detect movement of a conductor such as a finger in the upper area close to the display unit 151 rather than sense touch on the display unit 151, sensitivity can be made higher to some extent.

If the user moves his or her finger from a first position (P1) to a second position (P2) without touching the display unit 151, a first to a fourth proximity sensor layer (PS1 to PS4) can respectively detect capacitance change. Capacitance change detected is input to the controller (C of FIG. 7) and used to calculate the corresponding coordinate values.

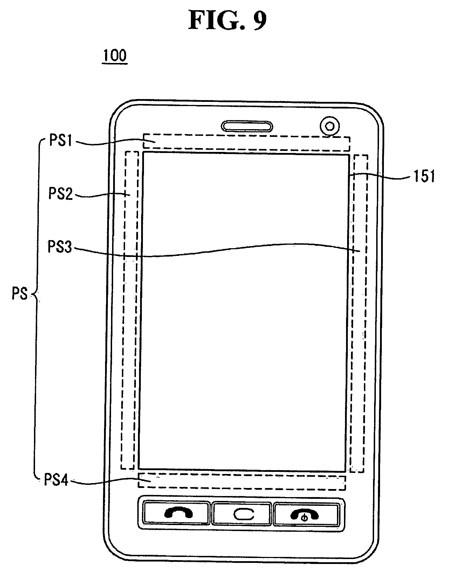

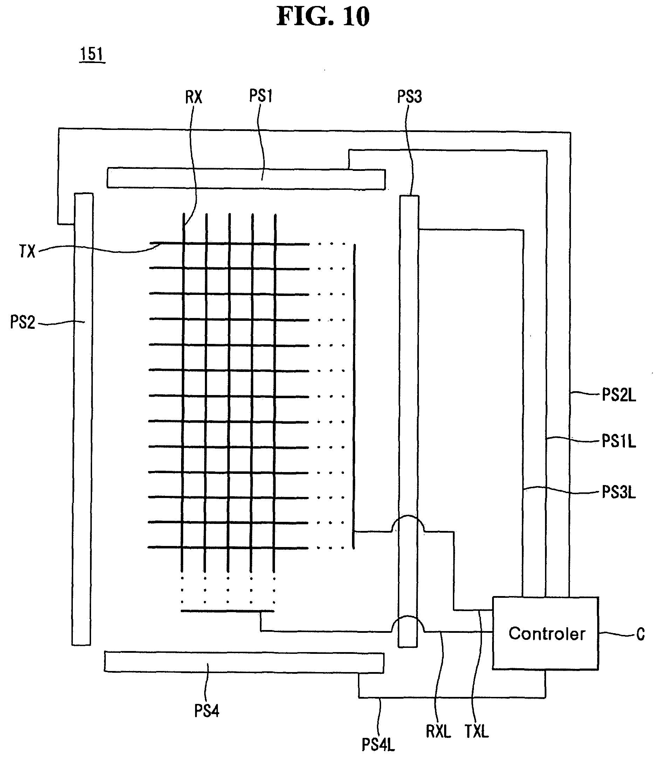

FIG. 9 is a plan view of a mobile terminal according to an illustrative example only and FIG. 10 illustrates relationship between a proximity touch sensor and a controller of a mobile terminal of FIG. 9.

As shown in the figure, a mobile terminal 100 according to another embodiment of the present invention can dispose a proximity sensor layer (PS) along four edges of a display unit 151 which actually forms a rectangular shape.

A proximity sensor layer (PS) can be disposed in such a way that a first to a fourth proximity sensor layer (PS1 to PS4) do not overlap the display unit 151.

As shown in FIG. 10, in a case according to another embodiment of the present invention, too, a controller (C) controlling a touch input layer (TX) and a touch output layer (RX) can be used for controlling a first to a fourth proximity sensor layer (PS1 to PS4). Therefore, in a case according to another embodiment of the present invention, too, even if a function for detecting proximity signals is added, a total cost for manufacturing a mobile terminal 100 can be made relatively low.

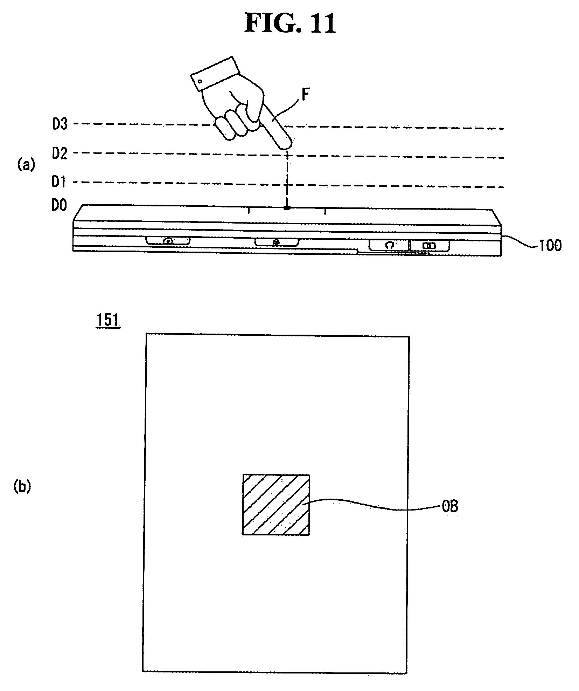

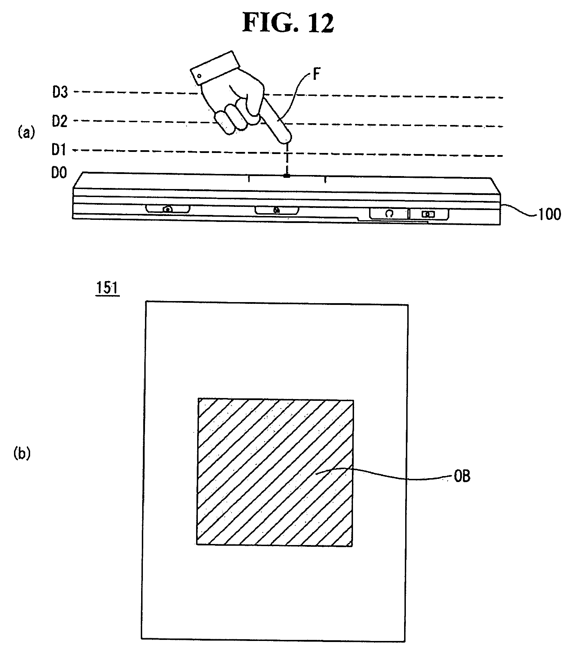

FIGS. 11 and 12 illustrate operational procedures of a mobile terminal according to one embodiment of the present invention.

As shown in the figure, a mobile terminal 100 according to one embodiment of the present invention can change screen status displayed on a display unit 151 according to proximity touch motion of the user.

As shown in FIG. 11 (A), the user can position his or her finger (F) at an upper particular point of a mobile terminal 100. For example, the user can position his or her finger (F) at a third proximity depth between D2 and D3.

If a finger (F) is positioned at an upper particular point of a mobile terminal 100, a first to a fourth proximity sensor layer (PS1 to PS4 of FIG. 10) can detect capacitance change. If the position of the figure (F) is detected through the first to the fourth proximity sensor layer (PS1 to PS4 of FIG. 10), a controller (C of FIG. 7) can calculate x-y coordinate values and a height value along z-direction.

As shown in FIG. 11 (B), a display unit 151 can display an object (OB). An object (OB) can be displayed at a position with a size corresponding to the position and the size of the detected finger (F). In other words, as shown in FIG. 11 (A), if the finger (F) is positioned at a third proximity depth, the object (OB) can be displayed in accordance with the position.

As shown in FIG. 12 (A), the user can position his or her finger (F) close to a mobile terminal 100. In other words, the user can position his or her finger (F) at a second proximity depth between D1 and D2.

As shown in FIG. 12 (B), the controller (C of FIG. 7) can display an object (OB) much larger. For example, if the user moves his or her finger (F) from the position of FIG. 11 (A) to the position of FIG. 12 (A), an object (OB) can be displayed magnified according to the movement.

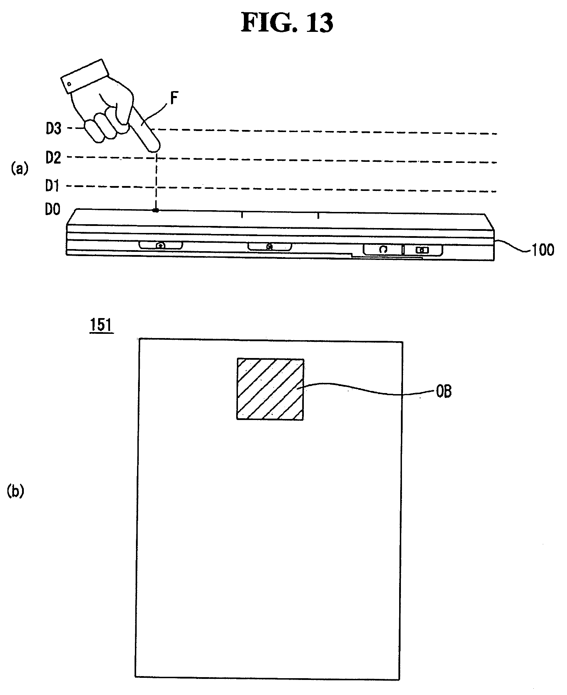

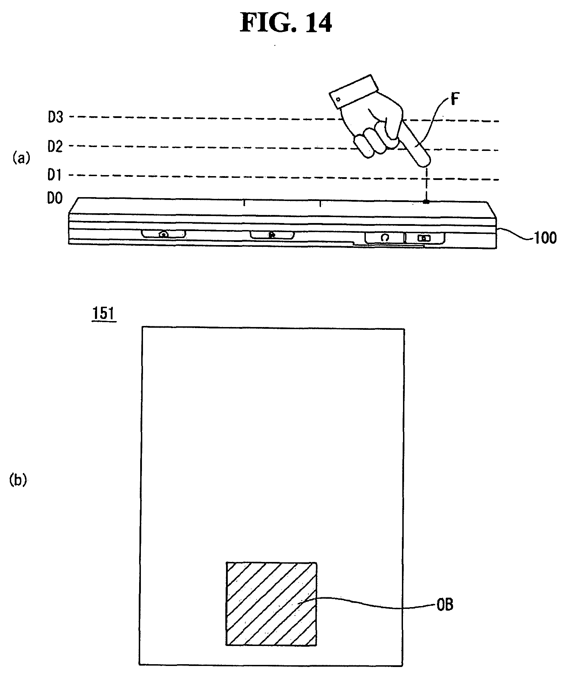

FIGS. 13 and 14 illustrate different operational procedures of a mobile terminal according to one embodiment of the present invention.

As shown in the figures, a mobile terminal 100 according to one embodiment of the present invention, an object (OB) can be displayed differently according to a proximity position and a distance of the user.

As shown in FIG. 13 (A), the user can position his or her finger (F) at a third proximity depth in the upper side of a mobile terminal 100.

As shown in FIG. 13 (B), the controller (C of FIG. 7) can display an object (OB) corresponding to the position of the finger (F). In other words, an object (OB) can be displayed below the area where the finger (F) is positioned in accordance with a proximity depth.

As shown in FIG. 14 (A), the user can position his or her finger (F) at a second proximity depth in the lower side of a mobile terminal 100.

As shown in FIG. 14 (B), the controller (C of FIG. 7) can display an object (OB) corresponding to the position of the finger (F). In other words, an object (OB) is displayed at a position changed according to the changed position of the finger (F) and at the same time, the object (OB) can be displayed with a size changed according to the changed proximity depth of the finger (F).

In FIGS. 11 to 13, an object (OB) is assumed to be of rectangular shape. However, an object (OB) can assume various icons or menus displayed on a display unit 151. For example, a particular menu to be selected by the user can be displayed on a display unit 151; if the user moves his or her finger (F) towards the display unit 151, a displayed menu can be magnified.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100), comprising:
a wireless communication unit (110) configured to wirelessly communicate with at least one other terminal;
a capacitance touch screen configured to detect a touching of the touch screen including an input touch layer (TX), an output touch layer (RX) configured to output touch signals corresponding to the touching of the touch screen, a display layer (L) configured to display information, and a proximity sensor layer (PS) configured to detect a capacitance change disposed between the touch input layer (TX) and the touch output layer (RX) and configured to proximity detect a movement of a selection unit over the capacitance touch screen without the selection unit actually touching the capacitance touch screen; and
a controller (180) configured to calculate coordinates of a touch point where the capacitance touch screen was touched based on the output touch signals and to calculate coordinates of points along the movement of the selection unit based on a capacitance change detected by the proximity sensor layer.

2. The mobile terminal of claim 1, wherein the controller (180) is a single controller that calculates both the coordinates of the touch point where the touch screen was touched and the coordinates of points along the detected movement of the selection unit.

3. The mobile terminal of claim 1, wherein the touch input layer (TX) is disposed closer to the display layer (L) than the touch output layer (RX) so as to minimize distortion to the output touch signals caused by noise generated from the display layer.

4. The mobile terminal of claim 1, wherein the proximity sensor layer (PS) is a single flat panel parallel to the display layer, the touch input layer and the touch output layer.

5. The mobile terminal of claim 1, wherein the proximity sensor layer (PS) includes separated proximity sensor layers disposed along a periphery of the capacitance touch screen, and includes four separated proximity sensor layers with two separated proximity sensor layers respectively disposed on upper and lower portions of the capacitance touch screen and two separated proximity sensor layers respectively disposed on left and right sides of the capacitance touch screen.

6. The mobile terminal of claim 5, wherein the controller (180) is further configured to use capacitance signals generated by the separate proximity sensor layers in combination to calculate the coordinates of the points along the detected movement of the selection unit.

7. The mobile terminal of claim 5, wherein when the display layer (L) displays an image and the controller (180) detects the selection unit moving closer to the capacitance touch screen, the controller (180) increases a size of the displayed image, and when the controller detects the selection unit moving away from the capacitance touch screen, the controller decreases a size of the displayed image, and
wherein when the controller (180) detects the selection unit moving along the capacitance touch screen, the controller is further configured to move the displayed image in concert with the movement of the selection unit.

8. A method of controlling a mobile terminal (100), the method comprising:
allowing, via a wireless communication unit (110) on the mobile terminal, wireless communication with at least one other terminal;
displaying, via a display unit (151), information generated by the mobile terminal, said display unit including a capacitance touch screen configured to detect a touching of the touch screen including an input touch layer (TX), an output touch layer (RX) configured to output touch signals corresponding to the touching of the touch screen, a display layer (L) configured to display information, and a proximity sensor layer (PS) configured to detect a capacitance change disposed between the touch input layer and the touch output layer and configured to proximity detect a movement of a selection unit over the capacitance touch screen without the selection unit actually touching the capacitance touch screen; and
calculating, via a controller (180) on the mobile terminal, coordinates of a touch point where the capacitance touch screen was touched based on the output touch signals and coordinates of points along the detected movement of the selection unit based on a capacitance change detected by the proximity sensor layer.

9. The method of claim 8, wherein the controller (180) is a single controller that calculates both the coordinates of the touch point where the touch screen was touched and the coordinates of points along the detected movement of the selection unit.

10. The method of claim 8, wherein the touch input layer (TX) is disposed closer to the display layer than the touch output layer so as to minimize distortion to the
output touch signals caused by noise generated from the display layer.

11. The method of claim 8, wherein the proximity sensor layer (PS) is a single flat panel parallel to the display layer, the touch input layer and the touch output layer.

12. The method of claim 8, wherein the proximity sensor layer (PS) includes separated proximity sensor layers disposed along a periphery of the capacitance touch screen, and includes four separated proximity sensor layers with two separated proximity sensor layers respectively disposed on upper and lower portions of the capacitance touch screen and two separated proximity sensor layers respectively disposed on left and right sides of the capacitance touch screen, the method further comprises using, by the controller, capacitance signals generated by the separate proximity sensor layers in combination to calculate the coordinates of the points along the detected movement of the selection unit.

13. The method of claim 12, wherein when the display layer (L) displays an image and the selection unit is detected as moving closer to the capacitance touch screen, the method further comprises increasing a size of the displayed image, and when the selection unit is detected as moving away from the capacitance touch screen, the method further comprises decreasing a size of the displayed image, and
wherein when the selection unit is detected as moving along the capacitance touch screen, the method further comprises moving the displayed image in concert with the movement of the selection unit.

## Patentansprüche

1. Mobiles Endgerät (100), das umfasst:
eine drahtlose Kommunikationseinheit (110), die dazu eingerichtet ist, drahtlos mit mindestens einem anderen Endgerät zu kommunizieren;
einen kapazitiven berührungssensitiven Bildschirm, der dazu eingerichtet ist, eine Berührung des berührungssensitiven Bildschirms zu erfassen, der eine Eingabeberührungsschicht (TX), eine Ausgabeberührungsschicht (RX), die dazu eingerichtet ist, der Berührung des berührungssensitiven Bildschirms entsprechende Berührungssignale auszugeben, eine Anzeigeschicht (L), die dazu eingerichtet ist, eine Information anzuzeigen, und eine Näherungssensorschicht (PS) umfasst, die dazu eingerichtet ist, eine Kapazitätsänderung zu erfassen, zwischen der Berührungseingabeschicht (TX) und der Berührungsausgabeschicht (RX) angeordnet ist und dazu eingerichtet ist, eine Näherungserfassung einer Bewegung einer Auswahleinheit über den kapazitiven berührungssensitiven Bildschirm durchzuführen, ohne dass die Auswahleinheit den kapazitiven berührungssensitiven Bildschirm tatsächlich berührt; und
eine Steuerung (180), die dazu eingerichtet ist, auf der Basis der ausgegebenen Berührungssignale Koordinaten eines Berührungspunkts zu berechnen, wo der kapazitive berührungssensitive Bildschirm berührt worden ist, und auf der Basis einer durch die Näherungssensorschicht erfassten Kapazitätsänderung Koordinaten von Punkten entlang der Bewegung der Auswahleinheit zu berechnen.

2. Mobiles Endgerät nach Anspruch 1, wobei die Steuerung (180) eine einzige Steuerung ist, die sowohl die Koordinaten des Berührungspunkts, wo der berührungssensitive Bildschirm berührt worden ist, als auch die Koordinaten von Punkten entlang der erfassten Bewegung der Auswahleinheit berechnet.

3. Mobiles Endgerät nach Anspruch 1, wobei die Berührungseingabeschicht (TX) näher an der Anzeigeschicht (L) angeordnet ist als die Berührungsausgabeschicht (RX), um eine Verzerrung der ausgegebenen Berührungssignale zu minimieren, die durch eine von der Anzeigeschicht erzeugte Störung verursacht wird.

4. Mobiles Endgerät nach Anspruch 1, wobei die Näherungssensorschicht (PS) ein einziges flaches Panel ist, das parallel zu der Anzeigeschicht, der Berührungseingabeschicht und der Berührungsausgabeschicht ist.

5. Mobiles Endgerät nach Anspruch 1, wobei die Näherungssensorschicht (PS) voneinander getrennte Näherungssensorschichten umfasst, die entlang eines Umfangs des kapazitiven berührungssensitiven Bildschirms angeordnet sind, und vier voneinander getrennte Näherungssensorschichten umfasst, wobei zwei voneinander getrennte Näherungssensorschichten jeweils auf oberen und unteren Abschnitten des kapazitiven berührungssensitiven Bildschirms angeordnet sind und zwei voneinander getrennte Näherungssensorschichten jeweils auf linken und rechten Seiten des kapazitiven berührungssensitiven Bildschirms angeordnet sind.

6. Mobiles Endgerät nach Anspruch 5, wobei die Steuerung (180) ferner dazu eingerichtet ist, Kapazitätssignale zu verwenden, die in Kombination von den voneinander getrennten Näherungssensorschichten erzeugt werden, um die Koordinaten der Punkte entlang der erfassten Bewegung der Auswahleinheit zu berechnen.

7. Mobiles Endgerät nach Anspruch 5, wobei, wenn die Anzeigeschicht (L) ein Bild anzeigt und die Steuerung (180) erfasst, dass sich die Auswahleinheit näher an den kapazitiven berührungssensitiven Bildschirm heran bewegt, die Steuerung (180) eine Größe des dargestellten Bilds erhöht, und, wenn die Steuerung erfasst, dass sich die Auswahleinheit von dem kapazitiven berührungssensitiven Bildschirm weg bewegt, die Steuerung eine Größe des dargestellten Bilds verringert, und
wobei, wenn die Steuerung (180) erfasst, dass sich die Auswahleinheit entlang des kapazitiven berührungssensitiven Bildschirms bewegt, die Steuerung ferner dazu eingerichtet ist, das dargestellte Bild gemeinsam mit der Bewegung der Auswahleinheit zu bewegen.

8. Verfahren zum Steuern eines mobilen Endgeräts (100), wobei das Verfahren umfasst:
Ermöglichen einer drahtlosen Kommunikation mit mindestens einem anderen Endgerät über eine drahtlose Kommunikationseinheit (110) des mobilen Endgeräts;
Anzeigen einer durch das mobile Endgerät erzeugten Information über eine Anzeigeeinheit (151), wobei die Anzeigeeinheit einen kapazitiven berührungssensitiven Bildschirm umfasst, der dazu eingerichtet ist, eine Berührung des berührungssensitiven Bildschirms zu erfassen, der eine Eingabeberührungsschicht (TX), eine Ausgabeberührungsschicht (RX), die dazu eingerichtet ist, der Berührung des berührungssensitiven Bildschirms entsprechende Berührungssignale auszugeben, eine Anzeigeschicht (L), die dazu eingerichtet ist, eine Information anzuzeigen, und eine Näherungssensorschicht (PS) umfasst, die dazu eingerichtet ist, eine Kapazitätsänderung zu erfassen, zwischen der Berührungseingabeschicht und der Berührungsausgabeschicht angeordnet ist und dazu eingerichtet ist, eine Näherungserfassung einer Bewegung einer Auswahleinheit über den kapazitiven berührungssensitiven Bildschirm durchzuführen, ohne dass die Auswahleinheit den kapazitiven berührungssensitiven Bildschirm tatsächlich berührt; und
Berechnen von Koordinaten eines Berührungspunkts, wo der kapazitive berührungssensitive Bildschirm berührt worden ist, auf der Basis der ausgegebenen Berührungssignale und von Koordinaten von Punkten entlang der Bewegung der Auswahleinheit auf der Basis einer durch die Näherungssensorschicht erfassten Kapazitätsänderung über eine Steuerung (180) des mobilen Endgerät.

9. Verfahren nach Anspruch 8, wobei die Steuerung (180) eine einzige Steuerung ist, die sowohl die Koordinaten des Berührungspunkts, wo der berührungssensitive Bildschirm berührt worden ist, als auch die Koordinaten von Punkten entlang der erfassten Bewegung der Auswahleinheit berechnet.

10. Verfahren nach Anspruch 8, wobei die Berührungseingabeschicht (TX) näher an der Anzeigeschicht angeordnet ist als die Berührungsausgabeschicht, um eine Verzerrung der ausgegebenen Berührungssignale zu minimieren, die durch eine von der Anzeigeschicht erzeugte Störung verursacht wird.

11. Verfahren nach Anspruch 8, wobei die Näherungssensorschicht (PS) ein einziges flaches Panel ist, das parallel zu der Anzeigeschicht, der Berührungseingabeschicht und der Berührungsausgabeschicht ist.

12. Verfahren nach Anspruch 8, wobei die Näherungssensorschicht (PS) voneinander getrennte Näherungssensorschichten umfasst, die entlang eines Umfangs des kapazitiven berührungssensitiven Bildschirms angeordnet sind, und vier voneinander getrennte Näherungssensorschichten umfasst, wobei zwei voneinander getrennte Näherungssensorschichten jeweils auf oberen und unteren Abschnitten des kapazitiven berührungssensitiven Bildschirms angeordnet sind und zwei voneinander getrennte Näherungssensorschichten jeweils auf linken und rechten Seiten des kapazitiven berührungssensitiven Bildschirms angeordnet sind, wobei das Verfahren ferner die Verwendung der in Kombination von den voneinander getrennten Näherungssensorschichten erzeugten Kapazitätssignale durch die Steuerung umfasst, um die Koordinaten der Punkte entlang der erfassten Bewegung der Auswahleinheit zu berechnen.

13. Verfahren nach Anspruch 12, wobei, wenn die Anzeigeschicht (L) ein Bild anzeigt und erfasst wird, dass sich die Auswahleinheit näher an den kapazitiven berührungssensitiven Bildschirm heran bewegt, das Verfahren ferner das Erhöhen einer Größe des dargestellten Bilds umfasst, und, wenn erfasst wird, dass sich die Auswahleinheit von dem kapazitiven berührungssensitiven Bildschirm weg bewegt, das Verfahren ferner das Verringern einer Größe des dargestellten Bilds umfasst, und wobei, wenn erfasst wird, dass sich die Auswahleinheit entlang des kapazitiven berührungssensitiven Bildschirms bewegt, das Verfahren ferner das Bewegen des dargestellten Bilds gemeinsam mit der Bewegung der Auswahleinheit umfasst.

## Revendications

1. Terminal mobile (100), comprenant :
une unité (110) de communication sans fil configurée pour communiquer sans fil avec au moins un autre terminal ;
un écran tactile capacitif configuré pour détecter un toucher de l'écran tactile incluant une couche d'entrée tactile (TX), une couche de sortie tactile (RX) configurée pour délivrer en sortie des signaux tactiles correspondant au toucher de l'écran tactile, une couche d'affichage (L) configurée pour afficher des informations, et une couche de capteur de proximité (PS) configurée pour détecter un changement de capacité disposée entre la couche d'entrée tactile (TX) et la couche de sortie tactile (RX) et configurée pour une détection de proximité d'un déplacement d'une unité de sélection sur l'écran tactile capacitif sans que l'unité de sélection touche réellement l'écran tactile capacitif ; et
un contrôleur (180) configuré pour calculer les coordonnées d'un point tactile au niveau duquel l'écran tactile capacitif a été touché sur la base des signaux tactiles délivrés en sortie et pour calculer les coordonnées des points le long du déplacement de l'unité de sélection sur la base d'un changement de capacité détecté par la couche de capteur de proximité.

2. Terminal mobile selon la revendication 1, dans lequel le contrôleur (180) est un contrôleur unique qui calcule à la fois les coordonnées du point tactile au niveau duquel l'écran tactile a été touché et les coordonnées des points le long du déplacement détecté de l'unité de sélection.

3. Terminal mobile selon la revendication 1, dans lequel la couche d'entrée tactile (TX) est disposée plus près de la couche d'affichage (L) que la couche de sortie tac-tile (RX) de façon à minimiser la distorsion sur les signaux tactiles délivrés en sortie provoquée par le bruit généré à partir de la couche d'affichage.

4. Terminal mobile selon la revendication 1, dans lequel la couche de capteur de proximité (PS) est un panneau plat unique parallèle à la couche d'affichage, à la couche d'entrée tactile et à la couche de sortie tactile.

5. Terminal mobile selon la revendication 1, dans lequel la couche de capteur de proximité (PS) comprend des couches de capteurs de proximité séparées disposées le long d'une périphérie de l'écran tactile capacitif, et comprend quatre couches de capteurs de proximité séparées avec deux couches de capteurs de proximité séparées respectivement disposées sur les parties supérieure et inférieure de l'écran tactile capacitif et deux couches de capteurs de proximité séparées respectivement disposées sur les côtés gauche et droit de l'écran tactile capacitif.

6. Terminal mobile selon la revendication 5, dans lequel le contrôleur (180) est en outre configuré pour utiliser des signaux de capacité générés par les couches de capteurs de proximité séparées en combinaison pour calculer les coordonnées des points le long du déplacement détecté de l'unité de sélection.

7. Terminal mobile selon la revendication 5, dans lequel lorsque la couche d'affichage (L) affiche une image et que le contrôleur (180) détecte que l'unité de sélection se déplace plus près de l'écran tactile capacitif, le contrôleur (180) augmente une taille de l'image affichée, et lorsque le contrôleur détecte que l'unité de sélection se déplace en s'éloignant de l'écran tactile capacitif, le contrôleur diminue une taille de l'image affichée, et
dans lequel lorsque le contrôleur (180) détecte que l'unité de sélection se déplace le long de l'écran tactile capacitif, le contrôleur est en outre configuré pour déplacer l'image affichée de concert avec le déplacement de l'unité de sélection.

8. Procédé de commande d'un terminal mobile (100), le procédé comprenant les étapes consistant à :
autoriser, via une unité (110) de communication sans fil sur le terminal mobile, une communication sans fil avec au moins un autre terminal ;
afficher, via une unité d'affichage (151), des informations générées par le terminal mobile, ladite unité d'affichage incluant un écran tactile capacitif configuré pour détecter un toucher de l'écran tactile incluant une couche d'entrée tactile (TX), une couche de sortie tactile (RX) configurée pour délivrer en sortie des signaux tactiles correspondant au toucher de l'écran tactile, une couche d'affichage (L) configurée pour afficher des informations, et une couche de capteur de proximité (PS) configurée pour détecter un changement de capacité disposée entre la couche d'entrée tactile et la couche de sortie tactile et configurée pour une détection de proximité d'un déplacement d'une unité de sélection sur l'écran tactile capacitif sans que l'unité de sélection touche réellement l'écran tactile capacitif ; et
calculer, via un contrôleur (180) sur le terminal mobile, les coordonnées d'un point tactile au niveau duquel l'écran tactile capacitif a été touché sur la base des signaux tactiles délivrés en sortie et les coordonnées des points le long du déplacement de l'unité de sélection sur la base d'un changement de capacité détecté par la couche de capteur de proximité.

9. Procédé selon la revendication 8, dans lequel le contrôleur (180) est un contrôleur unique qui calcule à la fois les coordonnées du point tactile au niveau duquel l'écran tactile a été touché et les coordonnées des points le long du déplacement détecté de l'unité de sélection.

10. Procédé selon la revendication 8, dans lequel la couche d'entrée tactile (TX) est disposée plus près de la couche d'affichage que la couche de sortie tactile de façon à minimiser la distorsion sur les signaux tactiles délivrés en sortie provoquée par le bruit généré à partir de la couche d'affichage.

11. Procédé selon la revendication 8, dans lequel la couche de capteur de proximité (PS) est un panneau plat unique parallèle à la couche d'affichage, à la couche d'entrée tactile et à la couche de sortie tactile.

12. Procédé selon la revendication 8, dans lequel la couche de capteur de proximité (PS) comprend des couches de capteurs de proximité séparées disposées le long d'une périphérie de l'écran tactile capacitif, et comprend quatre couches de capteurs de proximité séparées avec deux couches de capteurs de proximité séparées respectivement disposées sur les parties supérieure et inférieure de l'écran tactile capacitif et deux couches de capteurs de proximité séparées respectivement disposées sur les côtés gauche et droit de l'écran tactile capacitif, le procédé comprenant en outre l'utilisation, par le contrôleur, de signaux de capacité générés par les couches de capteurs de proximité séparées en combinaison pour calculer les coordonnées des points le long du déplacement détecté de l'unité de sélection.

13. Procédé selon la revendication 12, dans lequel lorsque la couche d'affichage (L) affiche une image et que l'unité de sélection est détectée comme se déplaçant plus près de l'écran tactile capacitif, le procédé comprend en outre l'étape consistant à augmenter une taille de l'image affichée, et lorsque l'unité de sélection est détectée comme s'éloignant de l'écran tactile capacitif, le procédé comprend en outre l'étape consistant à diminuer une taille de l'image affichée, et
dans lequel lorsque l'unité de sélection est détectée comme se déplaçant le long de l'écran tactile capacitif, le procédé comprend en outre l'étape consistant à déplacer l'image affichée de concert avec le déplacement de l'unité de sélection.
